**Europäisches Patentamt**

**European Patent Office**

**Office européen des brevets**

(19)

(11) Veröffentlichungsnummer: **0 111 701**
**B1**

(12) **EUROPÄISCHE PATENTSCHRIFT**

(45) Veröffentlichungstag der Patentschrift:
**13.08.86**

(21) Anmeldenummer: **83110905.3**

(22) Anmeldetag: **02.11.83**

(51) Int. Cl.⁴: **A 01 G 9/24,** A 01 C 1/02,
F 24 F 5/00

(54) **Befeuchtungssystem für eine geschlossene Aufzuchtkammer.**

(30) Priorität: **23.12.82 DE 3247695**

(43) Veröffentlichungstag der Anmeldung:
**27.06.84 Patentblatt 84/26**

(45) Bekanntmachung des Hinweises auf die Patenterteilung:
**13.08.86 Patentblatt 86/33**

(84) Benannte Vertragsstaaten:
**FR GB IT**

(56) Entgegenhaltungen:
**DE-A-2 620 218**
**DE-B-2 210 473**

(73) Patentinhaber: **ERNO Raumfahrttechnik Gesellschaft mit beschränkter Haftung, Hünefeldstrasse 1-5, D-2800 Bremen (DE)**

(72) Erfinder: **Dietrich, Jürgen, Jan Reiners Weg 37, D-2804 Lilienthal (DE)**

**Beschreibung**

Die Erfindung bezieht sich auf ein Befeuchtungssystem für eine geschlossene und mit einer Lichtquelle beleuchtete Aufzuchtkammer, mit einem beheizbaren Verdampfer, dessen Wasserdurchsatz von einem Regler in Abhängigkeit der durch einen Feuchtigkeitssensor bestimmten relativen Luftfeuchtigkeit beeinflußbar ist.

Aufzuchtkammern mit Befeuchtungssystemen sind grundsätzlich bekannt. Mit solchen Aufzuchtkammern lassen sich Pflanzen, Organismen und Kulturen verschiedenster Art aufziehen und beim Wachsen beobachten. Es ist daher notwendig, geschlossene Aufzuchtkammern nicht nur zu befeuchten, sondern neben der Beeinflussung des Befeuchtungsgrades auch zu beheizen oder zu kühlen.

Bisher war es üblich in einer geschlossenen und mit einer Lichtquelle versehenen Aufzuchtkammer eine elektrische Heizvorrichtung vorzusehen, und auf diese Wasser tropfen zu lassen zum Verdampfen in Abhängigkeit eines von der relativen Luftfeuchtigkeit beeinflußten Reglers. Ein solches Befeuchtungssystem arbeitet zufriedenstellend wenn die Aufzuchtkammer irdischen Verhältnissen ausgesetzt ist. Wird eine solche Aufzuchtkammer jedoch im Weltraum eingesetzt, dann versagt das Befeuchtungssystem, weil die Schwerelosigkeit die Zuführung des Wassers und das Tropfen verhindert.

Gattungsgemäße Vorrichtungen sind auch nach der DE-A-26 20 218 und DE-B-22 10 473 bekannt. Die hierbei verwendeten Befeuchtungssysteme haben den Mangel, daß ein Einsatz unter Bedingungen der Schwerelosigkeit nicht möglich ist, wie bereits vorstehend ausgeführt wurde.

Der Erfindung liegt daher die Aufgabe zugrunde, ein Befeuchtungssystem für eine Aufzuchtkammer der eingangs genannten Art vorzusehen, das eine zuverlässige Befeuchtung sowohl unter irdischen als auch unter schwerelosen Bedingungen gewährleistet. Gemäß der Erfindung ist diese Aufgabe dadurch gelöst, daß der Verdampfer über ein Kapillarrohr mit einem Wasserspeicher und einem Kondensator in Verbindung steht, und daß der Regler die Betriebstemperatur des Kondensators durch eine Kühlvorrichtung steuert und gleichzeitig eine Pumpvorrichtung zur Beeinflussung des Wasserdurchsatzes im Verdampfer ansteuert.

Die erfindungsgemäße Maßnahme hat zur Folge, daß das zu verdampfende Wasser unabhängig von den Bedingungen der Schwerkraft vom Kondensator zum Speicher und zum Verdampfer über das Kapillarrohr geleitet wird und über den Verdampfungsweg zum Kondensator zurückgelangt.Die Kapillarwirkung des Kapillarrohres bleibt von der Schwerelosigkeit unberührt und sichert damit die Befeuchtung auch beim Einsatz einer Aufzuchtkammer im Weltraum.

Bei einer zweckmäßigen Ausgestaltung des Befeuchtungssystems kann die für die Befeuchtung der Aufzuchtkammer vorgesehene Lichtquelle gleichzeitig als Wärmequelle für den Verdampfer eingesetzt werden, und außerdem kann als zusätzliche Wärmequelle dem Verdampfer noch ein Peltier-Element zugeordnet werden. Der Kondensator und die Kühlvorrichtung können dabei vorteilhafterweise eine Baueinheit bilden, wobei der Kondensator aus kegelförmigen Kondensationsrippen besteht, deren Kegelflächen in kapillaren Kanälen enden, von denen Dochte zum Kapillarrohr führen. Für die Kühlvorrichtung kann zweckmäßigerweise ein Peltier-Element eingesetzt werden, auf dessen Kühlseite der Kondensator angeordnet ist.

Weiterhin kann die Pumpvorrichtung und der Wasserspeicher in einem Zylinder zusammengefaßt werden, dessen Kolben von einem durch den Regler steuerbaren Motor verstellbar ist. Der Verdampfer kann hierbei aus einem erwärmbaren Gehäuse mit abgedeckter poröser Emissionswand und einer Gazefüllung bestehen, in den das Kapillarrohr mündet. Die mit dem Verdampfer verdunstete Feuchtigkeit wird zweckmäßigerweise mit einer Luftumwälzvorrichtung in der Aufzuchtkammer verteilt.

Die Erfindung wird anhand der beiliegenden Zeichnung näher erläutert. Es zeigen:

Fig. 1 eine Aufzuchtkammer mit einem Befeuchtungssystem

Fig. 2 ein Blockschaltbild des Befeuchtungssystems und

Fig. 3 den physikalischen Weg des Wassers in der Aufzuchtkammer nach Fig. 1

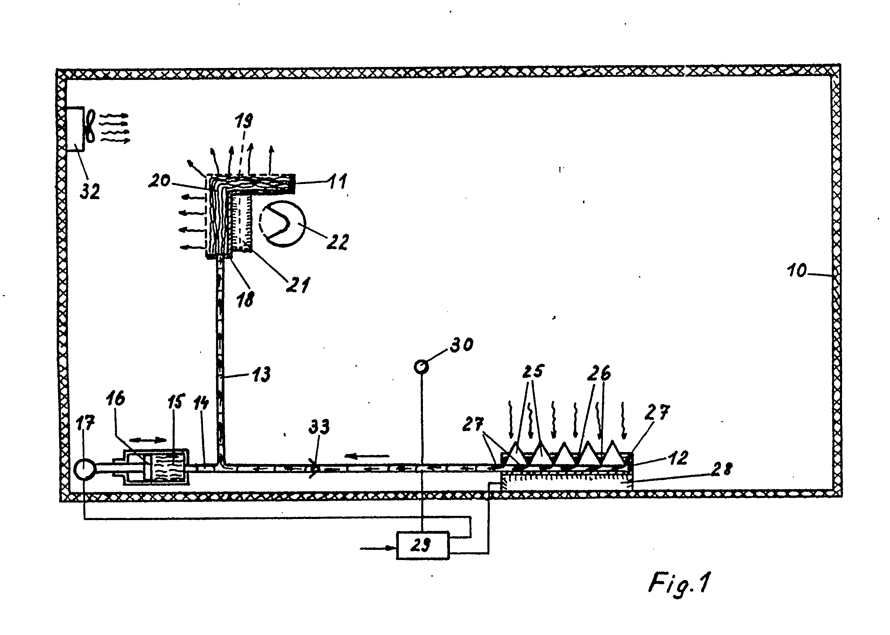

Die Darstellung nach Fig. 1 zeigt eine Aufzuchtkammer 10 in der ein Verdampfer 11 und ein Kondensator 12 eines Befeuchtungssystems angeordnet sind. Beide Baueinheiten sind durch ein Kapillarrohr 13 miteinander verbunden und liegen über einen kapillaren Rohrstutzen 14 dieses Kapillarrohres 13 an einem Zylinder 15. Der Zylinder 15 dient als Speicher und gleichzeitig als Pumpvorrichtung und zwar mit dem darin vorgesehenen Kolben 16 und einem auf diesen Kolben wirkenden Motor 17. Der Verdampfer 11 besteht aus einem winkelförmigen Gehäuse 18 mit einer porösen Emissionswand 19 und einer Gazefüllung 20. An einer Rückwand des Gehäuses 18 ist ein Peltier-Element 21 und zwar mit seiner Heizseite angebracht, und außerdem ist eine Lichtquelle 22 unmittelbar daneben angebracht,deren Abfallwärme zum Beheizen des Verdampfers benutzt wird. Zum Beheizen des Verdampfers kann auch die Abwärme anderer elektrischer Geräte benutzt werden.

Der Kondensator 12 besteht aus kegelförmigen Kondensationsrippen 25, die zwischen sich kapillare Kanäle 26 bilden, von denen Dochte 27 zum Kapillarrohr 13 führen. Zur Kühlung dieses Kondensators 12 ist eine Kühlvorrichtung 28 z. B.

ein Peltier-Element vorgesehen, das mit seiner Kühlseite am Kondensator 12 anliegt. Die Kühlvorrichtung 28 wird in ihrer Betriebstemperatur durch einen von einem Feuchtigkeitssensor 30 beeinflußbaren Regler 29 gesteuert, der gleichzeitig auch den Motor 17 des als Pumpvorrichtung wirkenden Zylinders 15 steuert. Die beim Einsatz mit dem Verdampfer 11 erzeugte Feuchtigkeit wird durch eine Luftumwälzvorrichtung 32 in der Aufzuchtkammer 10 verteilt. In Betrieb bildet dabei der Kondensator 12 mit seinen Kondensationsrippen 25 Kühlflächen, an denen die Feuchtigkeit niederschlägt, wenn die relative Luftfeuchtigkeit 100 % für die jweilige Kühltemperatur übersteigt. Ist die Luftfeuchtigkeit zu gering oder zu hoch, dann wird dies über den Feuchtigkeitssensor 30 dem Regler 2g gemeldet, welcher die Betriebstemperatur der Kühlvorrichtung 28 bei zu geringer Luftfeuchtigkeit erhöht und gleichzeitig den Motor 17 so ansteurt, daß der Kolben 16 im Zylinder 15 Wasser in das Kapillarrohr 13 nachschiebt. Damit dieses Wasser nicht zum Kondensator 12 gelangt, sondern zum Verdampfer 11, ist in das Kapillarrohr 13 ein Rückschlagventil 33 eingeschaltet, welches aber die Wasserwanderung zum Verdampfer 11 aufgrund der Kapillarwirkung zuläßt. Bei zu geringer Luftfeuchtigkeit wird dem Verdampfer 11 mehr Wasser zugeführt, wodurch auch mehr Wasser verdampft wird und die Luftfeuchtigkeit damit erhöht. Bei zu hoher Luftfeuchtigkeit erfolgt die Steuerung entsprechend umgekehrt. Das Befeuchtungssystem gewährleistet aufgrund des Kapillarrohres 13 in jeder Lage einen Wassertransport aufgrund der Kapillarwirkung auch bei Schwerelosigkeit und damit auch einen zuverlässigen Betrieb im Weltraum.

Fig. 2 zeigt als Ergänzung zu Fig. 1 ein Blockschaltbild, woraus das Zusammenwirken der Einzelstufen in Betrieb leicht zu ersehen ist. Die Lichtquelle 22 erzeugt dabei nicht nur Licht sondern auch Abwärme, die zum Beheizen des Verdampfers 11 dient. Für den Fall zu geringer Abwärme kann auch noch das in Fig. 1 vorgesehene Peltier-Element 21 zugeschaltet werden. Der Verdampfer 11 erhält neben der Wärme auch noch Wasser über das Kapillarrohr 13 und gibt seinerseits verdampftes Wasser als Luftfeuchtigkeit in die Aufzuchtkammer 10 ab.

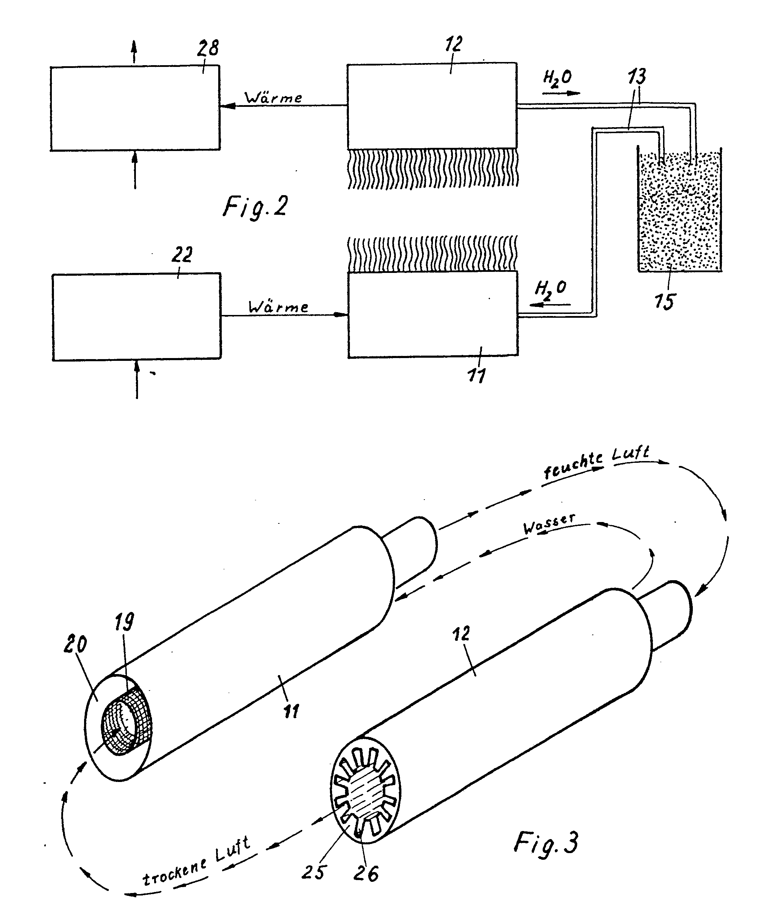

Die Feuchtigkeit wird danach vom Kondensator 12 aufgenommen, wobei das niedergeschlagene Wasser zum als Speicher wirkenden Zylinder 15 gelangt, während die Wärme über die Kühlvorrichtung 28 abgeleitet wird. Zum Betrieb erhalten die Kühlvorrichtung 28 und die Lichtquelle 22,wie durch Pfeile angedeutet, die erforderliche Energie. Wie aus Fig. 3 zu ersehen ist, durchläuft die mit der Luftumwälzvorrichtung 32 in der Auf-zuchtkammer 10 verteilte Luft vom Verdampfer 11 als angefeuchtete Luft den Raum um am Kondensator 12 abzukühlen. Der Kondensator 12 liefert daher zum Verdampfer Luft verringerter Feuchtigkeit, d. h. trockene Luft und die kondensierte Feuchtigkeit, welche für einen neuen Kreislauf dort verdampft wird. Bei einem Einsatz des Befeuchtungssystems im Weltraum wird das Wasser daher in einem stetigen Kreislauf verdampft bzw. kondensiert, wobei das Kapillarrohr den Wassertransport garantiert. Die bei der Verdampfung verbrauchte Wärme bedeutet insbesondere für die Abwärme eine sinnvolle Abführung, da hierdurch auch eine Kühlwirkung aufgrund der notwendigen Verdampfungswärme eintritt. Das System kann auch zum Regenerieren oder Reinigen der Luft verwendet werden. Es ist aber auch möglich, dieses System mit umgekehrter Wirkung,d. h. zum Trocknen der Luft zu betreiben.

**Patentansprüche**

Befeuchtungssystem für eine geschlossene und mit einer Lichtquelle (22) beleuchtete Aufzuchtkammer (10), mit einem beheizbaren Verdampfer (11), dessen Wasserdurchsatz von einem Regler (29) in Abhängigkeit der durch einen Feuchtigkeitssensor (30) bestimmten relativen Luftfeuchtigkeit beeinflußbar ist, dadurch. gekennzeichnet, daß der Verdampfer (11) über ein Kapillarrohr (13) mit einem Wasserspeicher (15) und einem Kondensator (12) in Verbindung steht und daß der Regler die Betriebstemperatur des Kondensators (12) durch eine Kühlvorrichtung (28) steuert und gleichzeitig eine Pumpvorrichtung (15, 16, 17) zur Beeinflussung des Wasserdurchsatzes im Verdampfer (11) ansteuert.

2) Befeuchtungssystem nach Anspruch 1, dadurch gekennzeichnet, daß die für die Beleuchtung der Aufzuchtkammer (10) vorgesehene Lichtquelle (22) gleichzeitig als Wärmequelle für den Verdampfer (11) eingesetzt ist.

3) Befeuchtungssystem nach Anspruch 1, dadurch gekennzeichnet, daß der Kondensator (12) und die Kühlvorrichtung (28) eine Baueinheit bilden und daß der Kondensator (12) aus kegelförmigen Kondensationsrippen (25) besteht, deren Kegelflächen in kapillaren Kanälen (26) enden, durch welche Dochte (17) zum Kapillarrohr (13) führen.

4) Befeuchtungssystem nach einem der Ansprüche 1 bis 3, dadurch gekennzeichnet, daß für die Kühlvorrichtung (28) ein Peltier-Element eingesetzt ist,auf dessen Kühlseite der Kondensator (12) angeordnet ist.

5) Befeuchtungssystem nach einem der Ansprühe 1 bis 4, dadurch gekennzeichnet, daß die Pumpvorrichtung und der Wasserspeicher in einen Zylinder (15) zusanmengefaßt sind, dessen Kolben (16) von einem durch den Regler (29) steuerbaren Motor (17) verstellbar ist.

6) Befeuchtungssystem nach einem der Ansprühe 1 bis 5, dadurch gekennzeichnet, daß dem Verdampfer (11) neben der Wärme der Lichtquelle (22) eine steuerbare Wärmequelle, vorzugsweise ein Peltier-Element (21) zugeordnet ist.

7) Befeuchtungssystem nach einem der Ansprühe 1 bis 6, dadurch gekennzeichnet, daß der Verdampfer (11) aus einem erwärmbaren Winkelförmigen Gehäuse (18) mit abgedeckter poröser Emissionswana (19) und einer Gazefüllung (20) besteht, in den das Kapillarrohr (13) mündet.

8) Befeuchtungssystem nach einem der vorhergehenden Ansprüche, dadurch gekennzeichnet, daß die im Verdampfer (11) verdunstete Feuchtigkeit durch eine Luftumwälzvorrichtung (32) in der Aufzuchtkammer (10) verteilt wird.

## Claims

1. A humidifying system for an enclosed cultivation chamber (10) illuminated by a light source (22) and having an evaporator (11) which can be heated and the water throughput of which can be influenced by a control (28) depending on the relative air humidity which can be determined by a humidity sensor (30), characterised in that the evaporator (11) is in communication, through a capillary tube (13), with a water reservoir (15) and a condenser (12) and that the control controls the operating temperature of the condenser (12) through a cooling device (28) and at the same time actuates a pumping device (15, 16, 17) to influence the water throughput in the evaporator (11).

2. A humidifying system as claimed in Claim 1, characterised in that the light source (22) provided for the illumination of the cultivation chamber (10) is used simultaneously as a heat source for the evaporator (11).

3. A humidifying system as claimed in Claim 1, characterised in that the condenser (12) and the cooling device (28) form a structural unit and that the condenser (12) consists of conical condensation fins (25), the conical surfaces of which end in capillary passages (26) through which wicks (17) lead to the capillary tube (13).

4. A humidifying system as claimed in any of Claims 1 to 3, characterised in that a Peltier element is used for the cooling device (28), at the cool side of which the condenser (12) is disposed.

5. A humidifying system as claimed in any of Claims 1 to 4, characterised in that the pumping device and the water reservoir are combined in a cylinder (15), the piston (16) of which is adjustable by a motor (17) which can be controlled by the control (29).

6. A humidifying system as claimed in any of Claims 1 to 5, characterised in that a controllable heat source, preferably a peltier element (21) is associated with the evaporator (11) in addition to the heat of the light source (22).

7. A humidifying system as claimed in any of Claims 1 to 6, characterised in that the evaporator (11) consists of an angular housing (18) which can be heated and has a covered porous emitting wall (19) and a gauze filling (20) into which the capillary tube (13) leads.

8. A humidifying system as claimed in any of the preceding Claims, characterised in that the moisture evaporated in the evaporator (11) is distributed in the cultivation chamber (10) by an air-circulating device (32).

## Revendications

1°) Système d'humidification pour une chambre de culture (10) close et éclairée par une source lumineuse (22), comportant un évaporateur (11) que l'on peut chauffer et dont un régulateur (29) peut influencer le débit d'eau en fonction de l'humidité relative de l'air déterminée par un détecteur d'humidité (30), caractérisé en ce que l'évaporateur (11) est en liaison, par l'intermédiaire d'un tube capillaire (13), avec une réserve d'eau (15) et un condenseur (12); et en ce que le régulateur commande la température d'exploitation du condenseur (12) au moyen d'un dispositif de production du froid (28) et commande simultanément un dispositif de pompage (15, 16, 17) pour influencer le débit de l'eau dans l'évaporateur (11).

2°) Système d'humidification selon la revendication 1, caractérisé en ce que la source lumineuse (22), prévue pour l'éclairage de la chambre de culture (10), sert simultanément de source de chaleur pour l'évaporateur (11).

3°) Système d'humidification selon la revendication 1, caractérisé en ce que le condenseur (12) et le dispositif de production du froid (28) constituent un ensemble; et en ce que le condenseur (12) est constitué de nervures coniques de condensation (25) dont les surfaces coniques se terminent dans des canaux capillaires (26) à travers lesquels des mèches (17) conduisent au tube capillaire (13).

4°) Système d'humidification selon l'une des revendications 1 à 3, caractérisé en ce que, pour le dispositif de production du froid (28), on utilise un élément à effet Peltier sur le côté de production de froid duquel est disposé le condenseur (12).

5°) Système d'humidification selon l'une des revendications 1 à 4, caractérisé en ce que le dispositif de pompage et la réserve d'eau sont regroupés dans un cylindre (15) dont le piston (16) peut être déplacé par un moteur (17) que peut commander le régulateur (29).

6°) Système d'humidification selon l'une des revendications 1 à 5, caractérisé en ce qu'à l'évaporateur (11), en plus de la chaleur de la source lumineuse (22), correspond une source de chaleur que l'on peut commander, de préférence à un élément à effet Peltier (21).

7°) Système d'humidification selon l'une des revendications 1 à 6, caractérisé en ce que l'évaporateur (11) est constitué d'un carter de forme angulaire (18) que l'on peut réchauffer et qui présente une paroi poreuse, couverte, d'émission (19) et un remplissage de gaze (20) dans lequel débouche le tube capillaire (13).

8°) Systéme d'humidification selon l'une des revendications précédentes, caractérisé en ce que l'humidité qui s'évapore dans l'évaporateur (11) est répartie dans la chambre de culture (10) par un dispositif de mise en circulation de l'air (32).

Fig.1

Fig.2

Fig.3